Europäisches Patentamt

European Patent Office

Office européen des brevets

(19)

(11) Numéro de publication: **0 282 392**
**A1**

(12) **DEMANDE DE BREVET EUROPEEN**

(21) Numéro de dépôt: 88400452.4

(22) Date de dépôt: 26.02.88

(51) Int. Cl.⁴: **B 29 C 45/14**
B 29 C 45/16, B 60 Q 3/04,
B 29 D 11/00

(30) Priorité: 26.02.87 FR 8702584

(43) Date de publication de la demande:
14.09.88 Bulletin 88/37

(84) Etats contractants désignés:
AT BE CH DE ES FR GB GR IT LI LU NL SE

(71) Demandeur: **Macrez, Guy**
**44, 5ème Avenue Le Lys Chantilly**
**F-60270 Lamorlaye** (FR)

(72) Inventeur: **Macrez, Guy**
**44, 5ème Avenue Le Lys Chantilly**
**F-60270 Lamorlaye** (FR)

(74) Mandataire: **Netter, André et al**
**Cabinet NETTER 40, rue Vignon**
**F-75009 Paris** (FR)

(54) Organe conducteur de lumière, procédé et moule pour sa fabrication.

(57) Procédé de fabrication d'un organe conducteur de lumière formé d'au moins une matière plastique conductrice de lumière et une matière plastique opaque, la matière plastique conductrice de lumière définissant au moins un trajet de conduction de lumière entre une plage d'entrée située dans une première face de l'organe et une plage de sortie située dans une seconde face de l'organe, ladite plage de sortie ou un ensemble de plages de sorties adjacentes correspondant à différents trajets de conduction étant adjacent à au moins une plage de fond définie par la matière opaque.

On injecte successivement et en automatique les deux matières plastiques dans un même moule, selon les étapes suivantes :

a) injection d'une première matière dans une première empreinte pour réaliser une ébauche;

b) ouverture du moule, l'ébauche restant solidaire de l'une des parties du moule;

c) refermeture du moule dans une position différente de sa position initiale, pour définir une seconde empreinte de volume plus grand que celui de la première et contenant l'ébauche;

d) injection de la seconde matière dans le volume libre de la seconde empreinte.

FIG.6

**Description**

Organe conducteur de lumière, procédé et moule pour sa fabrication

L'invention concerne un organe conducteur de lumière, ainsi qu'un procédé pour sa fabrication et un moule pour la mise en oeuvre de ce procédé.

L'invention s'applique en particulier à la réalisation d'un tableau de commande d'installation de chauffage ou de climatisation pour véhicule automobile.

Un tel tableau de commande, habituellement intégré au tableau de bord du véhicule, comprend une face avant visible présentant une couleur de fond, fréquemment noire, sur laquelle se détachent des signes tels que caractères et/ou symboles d'une couleur différente, qui peuvent être éclairés la nuit par des sources lumineuses placées derrière le tableau. Cette face avant est traversée par un ou plusieurs organes de manoeuvre tels que boutons rotatifs montés sur des axes, leviers ou curseurs qu'on déplace en regard des signes pour faire fonctionner l'installation selon les modalités souhaitées.

Un procédé connu pour réaliser un tel tableau de commande consiste à mouler une pièce en matière plastique conduc trice de lumière de la couleur des signes et à la recouvrir d'une pellicule de matière plastique de la couleur du fond présentant des ouvertures dont la forme et l'emplacement correspondent aux signes et au travers desquels on peut voir la pièce moulée. Ce procédé convient lorsque la face avant du tableau de commande est plane, mais devient très difficile et très coûteux à mettre en oeuvre lorsque cette face présente une forme complexe.

Un autre procédé connu consiste à injecter une pièce en matière plastique de la couleur du fond en surmoulant des inserts en matière plastique d'une autre couleur formant les signes. L'inconvénient de ce procédé est que les inserts, qui possèdent leurs dimensions définitives lors du surmoulage, gênent le retrait au refroidissement de la matière plastique formant le fond, conduisant à des défauts d'aspect et quelquefois à des fuites de lumière à l'interface entre les deux matières.

Le but de l'invention est de remédier à ces inconvénients des procédés connus.

Un autre but est de proposer une technologie automatique permettant une gamme étendue de propriétés des organes conducteurs de lumière réalisés, qu'ils soient utilisés comme tableau de commande d'installation de chauffage ou pour toute autre application.

L'invention vise notamment un procédé de fabrication d'un organe conducteur de lumière formé d'au moins une matière plastique conductrice de lumière et une matière plastique opaque, la matière plastique conductrice de lumière définissant au moins un trajet de conduction de lumière entre une plage d'entrée située dans une première face de l'organe et une plage de sortie située dans une seconde face de l'organe, ladite plage de sortie ou un ensemble de plages de sorties adjacentes correspondant à différents trajets de conduction étant adjacent à au moins une plage de fond définie par la matière opaque, caractérisé en ce qu'on injecte successivement et en automatique les deux matières plastiques dans un même moule, selon les étapes suivantes :

a) injection d'une première matière dans une première empreinte pour réaliser une ébauche;

b) ouverture du moule, l'ébauche restant solidaire de l'une des parties du moule;

c) refermeture du moule dans une position différente de sa position initiale, pour définir une seconde empreinte de volume plus grand que celui de la première et contenant l'ébauche;

d) injection de la seconde matière dans le volume libre de la seconde empreinte.

On qualifie de conductrice de lumière une matière qui se laisse traverser de façon appréciable par les rayons lumineux, par exemple une matière transparente ou translucide, et opaque une matière qui ne se laisse pratiquement pas traverser par les rayons lumineux. La matière conductrice peut être colorée de façon à modifier la lumière par conduction.

Le procédé n'est pas limité à l'injection de deux matières seulement. En cas d'injections successives de trois matières ou plus, la séquence des étapes b) à d) est répétée autant de fois qu'on injecte de matières en plus de la première.

De préférence, la dernière matière injectée est opaque et la ou les autres matières injectées sont conductrices de lumière. On peut prévoir notamment plusieurs matières conductrices de natures chimiques et/ou de couleurs différentes.

L'ébauche peut être réalisée par surmoulage de la première matière sur un ou plusieurs inserts en matière plastique conductrice de la lumière, ces inserts définissant des trajets de conduction supplémentaires.

L'invention prévoit également qu'une matière injectée dans le volume libre laissé par une ébauche préalablement formée peut présenter une composition chimique telle qu'elle n'adhère pas à la ou aux matières constitutives de l'ébauche et qu'elle présente un retrait différent de celui de ces dernières, de façon à réaliser une pièce distincte de l'ébauche, mobile par rapport à celle-ci et inséparable de celle-ci.

Selon une caractéristique du procédé, on réserve une ouverture traversante dans l'ébauche lors d'une étape d'injection et on permet à une matière injectée ultérieurement de traverser l'ouverture lors de l'étape d'injection correspondante.

L'invention a également pour objet un moule pour la mise en oeuvre du procédé qui vient d'être défini, comprenant une partie fixe et une partie mobile pouvant prendre par rapport à la partie fixe au moins deux positions de fermeture, la partie mobile coopérant avec la partie fixe dans la première et la seconde de ces positions pour définir la première empreinte et la seconde empreinte respectivement, des moyens étant prévus pour amener un élément déplaçable porté par la partie mobile du moule dans une position adjacente à la première empreinte lorsque la partie mobile est dans sa première position, et pour éloigner cet élément déplaçable de l'ébauche lorsque la partie mobile est dans sa seconde position.

Avantageusement, le moule comprend deux équipages pouvant coulisser parallèlement à la direction de fermeture du moule, un élément de butée disposé dans la partie fixe au voisinage de la seconde empreinte pour maintenir un premier équipage coulissant éloigné de la partie fixe pour écarter l'élément déplaçable de l'ébauche, et un culbuteur pouvant pivoter autour d'un axe perpendiculaire à ladite direction sous l'action du premier équipage coulissant pour pousser le second équipage coulissant vers la partie fixe et amener l'élément déplaçable dans sa position adjacente à la première empreinte.

L'invention a encore pour objet un organe conducteur de lumière obtenu par le procédé ci-dessus.

Dans un tel organe conducteur de lumière, l'une au moins des plages de sortie de lumière peut constituer un signe visuel destiné à être éclairé par le trajet de conduction correspondant de façon à être vu par un observateur regardant vers la seconde face.

En particulier, l'organe conducteur de lumière peut comprendre plusieurs trajets de conduction dont les plages de sortie sont voisines et les plages d'entrée écartées les unes des autres, le déplacement ou la mise en service sélective de sources lumineuses en regard des plages d'entrée donnant l'impression d'un déplacement ou d'un changement de dimension de signes formés par les plages de sortie.

L'organe conducteur de lumière peut également présenter une pluralité de plages de sortie reliées par des trajets de conduction à une plage d'entrée commune.

L'invention prévoit également la coopération de deux organes conducteurs de lumière tels que définis plus haut, selon un mouvement relatif faisant se déplacer une plage d'entrée d'un premier organe devant une pluralité de plages de sortie de l'autre organe, ou inversement, de façon à établir un trajet de conduction variable comprenant, en série, au moins un trajet de chacun des deux organes.

Par ailleurs, dans un organe conducteur de lumière comprenant deux pièces mobiles l'une par rapport à l'autre obtenues par injections successives de matières ne présentant pas d'adhérence mutuelle comme indiqué plus haut, chacune de ces deux pièces peut présenter des trajets de conduction, un trajet d'une pièce et un trajet de l'autre pièce étant placés en série pour au moins une position relative de celles-ci.

D'autres caractéristiques et avantages de l'invention ressortiront de la description détaillée ci-après et des dessins annexés dans lesquels :

     - la figure 1 est une vue de face d'un organe conducteur de lumière selon l'invention;

     - la figure 2 est une vue en coupe selon la ligne II-II de la figure 1;

     la figure 3 est une vue d'arrière;

     - les figures 4 et 5 sont des vues en coupe selon les lignes IV-IV et V-V respectivement de la figure 1;

     la figure 6 est une représentation simplifiée d'un moule selon l'invention;

     - la figure 7 est une vue partielle en coupe montrant un détail de l'ébauche dans la première empreinte;

     - la figure 8 est une vue analogue à la figure 7, prise après injection de la seconde matière plastique dans la seconde empreinte;

     les figures 9 et 10 sont des vues partielles en coupe montrant deux stades successifs de l'injection d'un organe conducteur de lumière comportant deux pièces mobiles l'une par rapport à l'autre;

     - la figure 11 est une vue analogue aux figures 9 et 10, montrant l'organe conducteur après démoulage.

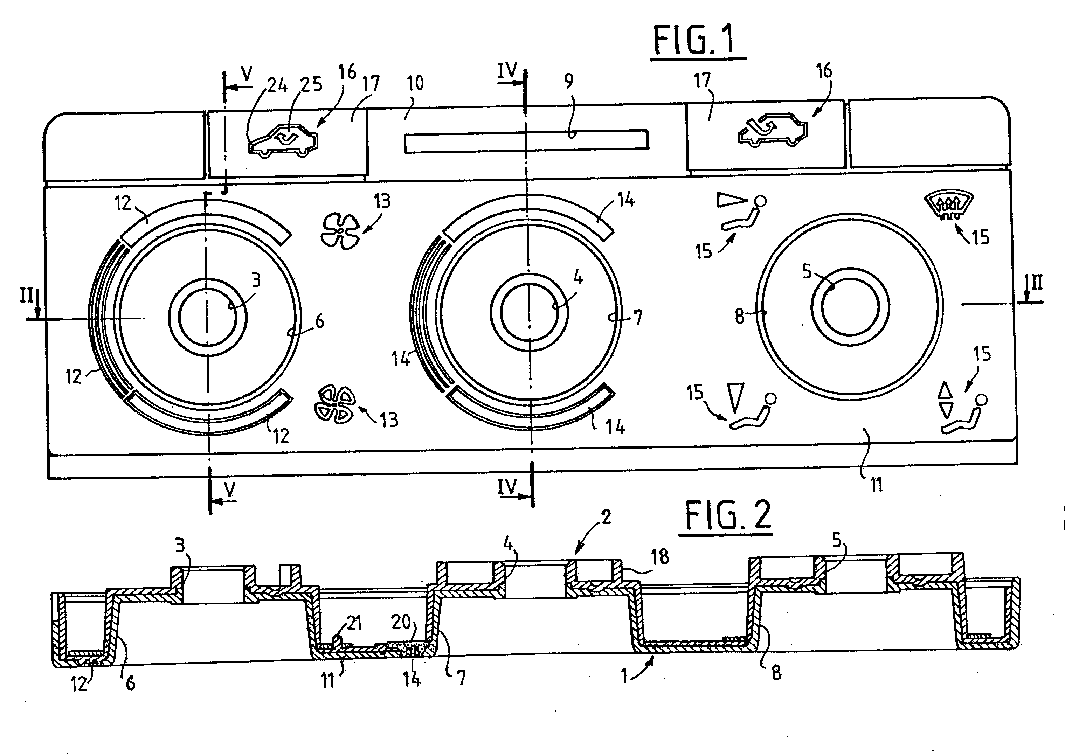

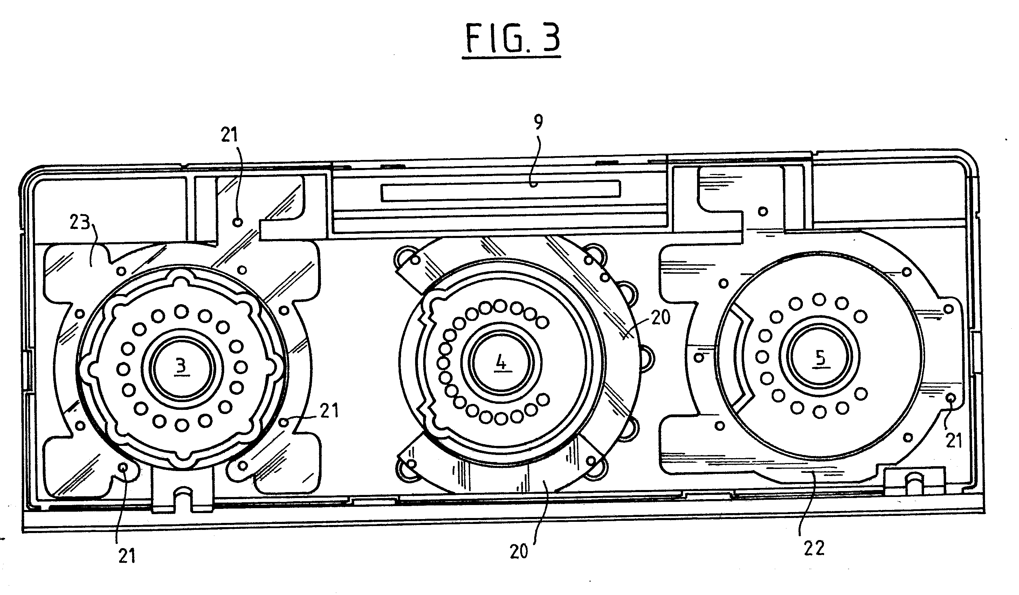

Les figures 1 à 5 représentent un tableau de commande d'installation de chauffage de forme générale rectangulaire, présentant une face avant ou face de sortie de lumière 1 destinée à être visible lorsque le tableau de commande est monté dans un véhicule, et une face arrière opposée ou face d'entrée de lumière 2, destinée à être éclairée la nuit par des ampoules électriques. La paroi du tableau de commande est traversée par trois trous 3, 4 et 5 destinés au passage et au guidage d'axes terminés par des boutons de commande logés dans des dépressions circulaires 6, 7 et 8 ménagées à partir de la face 1.

La paroi du tableau de commande est également traversée par une fente 9 destinée au passage d'une manette de commande et qui s'ouvre dans une partie 10 de la face 1 en retrait par rapport à la partie 11 d'où partent les dépressions 6 à 8.

La face 1 présente un fond noir, sur lequel se détachent des signes de couleurs différentes destinés à indiquer la fonction des organes de commande. Autour de la dépression 6, des bandes circonférentielles 12 et des symboles figuratifs 13 indiquent que le bouton de commande correspondant règle l'intensité de la ventilation. Des bandes 14 de même forme que les bandes 12, disposées autour de la dépression 7, indiquent que le second bouton de réglage règle la température de l'air. Autour de la dépression 8, des symboles figuratifs 15 indiquent dans quelle partie de l'habitacle de l'air est envoyé en fonction de la position du bouton de commande correspondant. Enfin, deux symboles figuratifs 16 placés au voisinage des extrémités de la fente 9 indiquent que la manette traversant celle-ci assure le dosage de l'air recyclé et de l'air provenant de l'extérieur. Les symboles 16 se trouvent sur une partie 17 de la face 1 située dans un plan compris entre celui de la partie 11 et celui de la partie 10.

Les lignes 12 et les symboles 13, 15 et 16 apparaissent en blanc lorsque le tableau de commande est éclairé par l'avant, c'est-à-dire de jour, et en orangé lorsque, de nuit, il est éclairé par l'arrière au moyen des sources lumineuses prévues à cet effet. Les lignes 14 apparaissent en vert et en rouge.

La couleur noire du fond de la face 1 et la couleur blanche des signes sont obtenues grâce au moulage du tableau de commande en deux couleurs au moyen d'un moule rotatif.

Selon ce procédé de moulage connu en lui-même, illustré par la figure 6, on injecte d'abord une ébauche 100 en une première matière plastique dans une empreinte 101 d'un moule 102 comprenant de façon classique une partie fixe 103 et une partie mobile 104 séparées par un plan de joint 105. On ouvre ensuite le moule en faisant coulisser la partie mobile 104 perpendiculairement au plan de joint, l'ébauche 100 restant attachée à la partie mobile. Le moule étant ouvert, on fait tourner la partie mobile 104 de 180° autour d'un axe 106 parallèle à la direction d'ouverture, et on referme le moule en définissant une seconde empreinte 107 partiellement occupée par l'ébauche 100. On injecte alors une seconde matière plastique 108 dans la partie restée libre de l'empreinte 107, avant refroidissement de l'ébauche, à partir d'une unité d'injection distincte de celle utilisée pour la première matière. Les deux matières se refroidissent ensemble, de sorte que si leur taux de retrait est le même, il n'en résulte pas plus de déformations que dans le cas d'une pièce injectée homogène.

Les deux matières peuvent être composées d'un même constituant de base et différer seulement par l'addition de pigments.

Pour réaliser selon ce procédé le tableau de commande décrit, on prépare une ébauche en matière plastique blanche translucide, qui constituera un composant 18 du tableau, et on injecte ensuite de la matière plastique de couleur noire, qui constituera un composant 19. Le composant noir 19 occupe la majeure partie de la face antérieure 1 et définit le fond noir de celle-ci. Le composant blanc 18 recouvre le composant 19 sur une grande partie de la face arrière 2 du tableau de commande. Le composant 18 s'étend notamment en regard des parties 11 et 17 de la face 1 qui contiennent les signes blancs, et traverse l'épaisseur du composant 19 pour former ces derniers.

De préférence, les matières plastiques formant les composants 18 et 19 ont les mêmes caractéristiques chimiques et se lient intimement sur toute leur surface de contact pour former un ensemble pratiquement aussi cohérent qu'une pièce moulée homogène en une seule couleur.

Pour la réalisation des lignes 14, des inserts 20 en matières plastiques translucides rouge et verte ont été placés dans la première empreinte du moule, et les matières plastiques blanches et noires sont surmoulées sur ces inserts. Ceux-ci traversent également l'épaisseur du composant 19 pour définir les signes correspondants.

Des éléments en matière plastique translucide de couleur orange, sous forme de feuilles, sont disposés sur la face arrière 2 du tableau de commande et sont tenus en place par rivetage au moyen de picots 21 dépendant du composant blanc 18. Deux tels éléments sont prévus, l'un 22 s'étendant notamment en regard des signes 12 et 13 et de l'un des symboles 16, l'autre 23 s'étendant notamment en regard des symboles 15 et de l'autre symbole 16. Grâce à ces éléments, ces signes apparaissent en orangé et non plus en blanc lorsqu'ils sont éclairés, la nuit, par les sources lumineuses placées à l'arrière du tableau de commande.

Grâce au fait que le composant blanc translucide 18 s'étend d'un seul tenant en regard d'une fraction importante de la face avant du tableau de commande, laquelle fraction englobe tous les signes formés par ce composant, il n'est pas nécessaire de prévoir des sources lumineuses individuelles pour éclairer ces signes par l'arrière. Une ou deux sources judicieusement placées suffisent pour produire cet effet de boîte à lumière.

On remarque que certains signes apparaissant sur le tableau de commande, par exemple le symbole 16 situé à gauche de la fente 9, comportent une plage annulaire blanche 24 entourant complètement une plage noire 25. La jonction entre la matière formant la plage 25 et la matière entourant la plage 24 se fait à travers le composant 18, au moyen d'ouvertures réservées dans l'ébauche en cours de moulage, comme il sera expliqué en relation avec les figures 6 à 8.

Il convient d'abord de préciser que la partie mobile 104 du moule est symétrique par rapport à l'axe 106. Dans chacune de ses positions de fermeture, elle coopère avec la partie fixe 103 pour définir une première empreinte 100 du côté gauche de la figure 6 et une seconde empreinte 107 du côté droit de la figure, chacune de ces empreintes ayant la même forme dans les deux positions. Après chaque mouvement d'ouverture, de rotation et de refermeture du moule, on commence une pièce en injectant une ébauche de la première couleur dans la première empreinte et on termine une autre pièce en injectant de la matière plastique de la seconde couleur dans la seconde empreinte sur une ébauche réalisée au cours de la phase précédente.

Au cours du moulage de l'ébauche 100, des broches 109 pouvant coulisser dans la partie mobile 104 du moule parallèlement à l'axe 106 traversent l'empreinte 101 et définissent par conséquent des ouvertures traversantes dans l'ébauche 100. Lors de l'injection de la matière plastique noire dans l'empreinte 107, les broches 109 sont rétractées de façon à ne pas remplir complètement les ouvertures ainsi réalisées. La matière plastique noire 108 vient occuper la fraction libérée de ces ouvertures et s'étend ainsi dans l'épaisseur de l'ébauche 100. Le mouvement des broches 109 est obtenu de la façon décrite ci-après.

Les extrémités 110 des broches 109 opposées à celles qui font saillie dans l'empreinte 101 s'appuient sur des plaques 111 s'étendant perpendiculairement à l'axe 106, c'est-à-dire parallèlement au plan de joint 105. Une plaque 111 est prévue dans chacune des moitiés de la partie 104 situées respectivement à gauche et à droite de l'axe 106 sur la figure 6, et associées à deux broches 109. Une tige de manoeuvre 112 a également une extrémité 113 en appui sur la face 114 de la plaque 111 tournée vers le plan de joint, c'est-à-dire vers l'empreinte. Les extrémités 110 et 113 sont élargies et maintenues contre la face 114 par une autre plaque 115 elle-même en contact avec cette face.

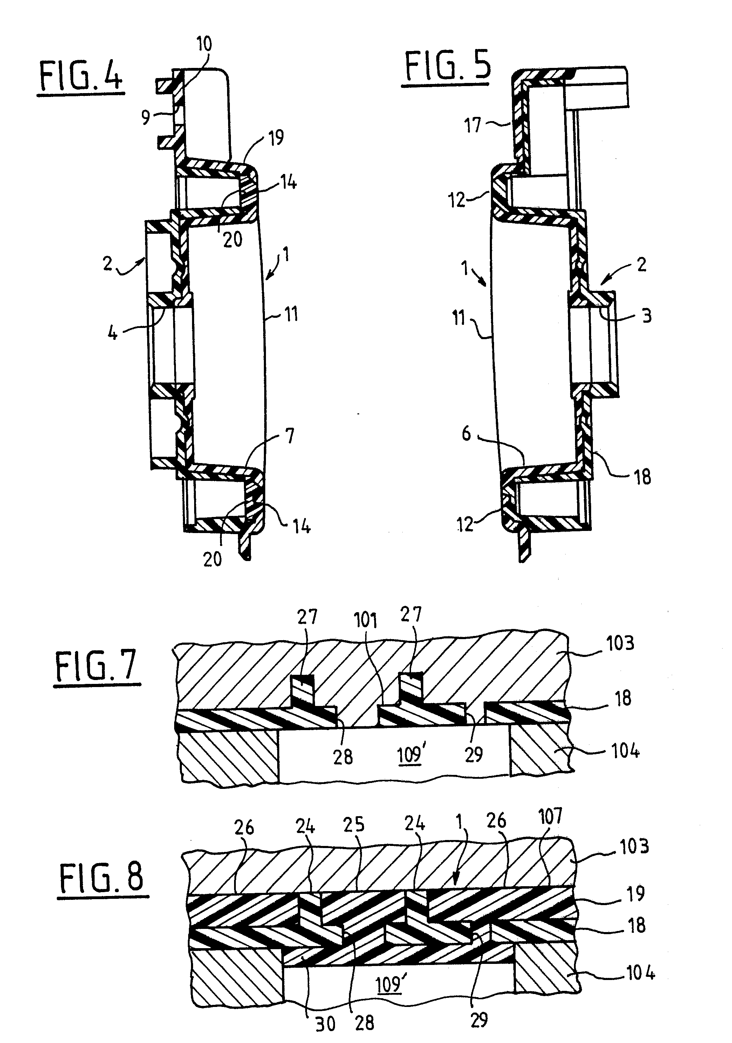

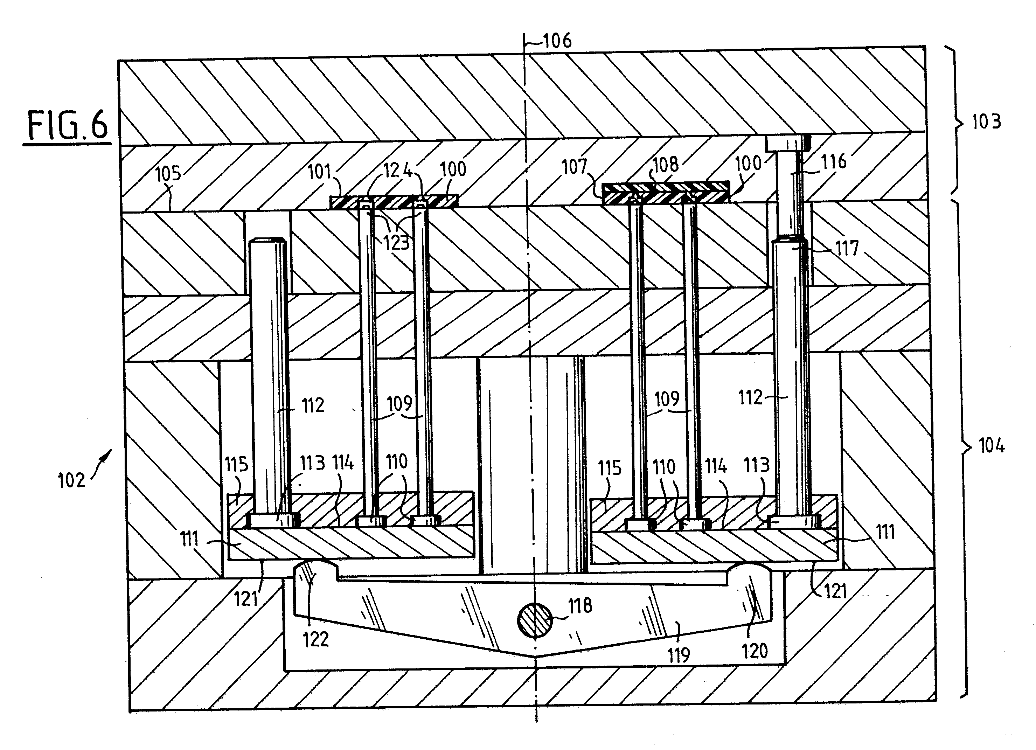

Une butée 116 solidaire de la partie fixe 103 du moule et située au voisinage de la seconde empreinte 107 fait saillie à travers le plan de joint dans la partie mobile 104. Lorsque le moule est fermé, la tige de manoeuvre 112 de l'un des équipages coulissants vient en contact avec la butée 116 par son extrémité 117 opposée à l'extrémité 113. Ce contact repousse l'équipage coulissant en éloignement de la partie fixe et fait pivoter, autour d'un axe 118 perpendiculaire au plan de la figure 7 un culbuteur 119 en forme de levier, l'extrémité de l'un des bras 120 de ce levier s'appuyant sur la face 121, opposée à la face 114, de la plaque 111 poussée par la butée 116 par l'intermédiaire de la tige 112. L'extrémité de l'autre bras 122 du culbuteur 119 pousse alors l'autre plaque 111 et les broches 109 qui lui sont associées, qui pénètrent dans l'empreinte 101. A chaque demi-tour de la partie mobile 104 autour de l'axe 106, les bras 120 et 122 du culbuteur 119 prennent la place l'un de l'autre et les deux équipages mobiles prennent également la place l'un de l'autre.

Dans l'exemple illustré à la figure 6, les extrémités des broches 109 définissant les ouvertures de l'ébauche comportent une section 123 de même diamètre que le reste des broches, qui pénètre dans l'empreinte 101, et une section terminale 124 de diamètre réduit qui pénètre dans la seule empreinte 107. Les ouvertures traversantes qu'elles forment dans l'ébauche 100 présentent donc une partie de diamètre réduit débouchant dans la face de l'ébauche tournée dans le sens de fermeture du moule, et une partie de plus grand diamètre débouchant dans la face tournée dans le sens d'ouverture du moule. Le remplissage de ces ouvertures lors de l'injection de la matière plastique de la seconde couleur 108 forme des tétons dont la forme assure une solidarisation mécanique mutuelle des deux matières. Une telle solidarisation, réalisée en des points répartis sur la surface de la pièce moulée, est utile lorsque ces deux matières ne sont pas chimiquement identiques ou compatibles.

Le mécanisme décrit en relation avec la figure 6 permet également, avec une conformation appropriée des extrémités des broches 109, de réaliser des ponts de matière plastique de la seconde couleur à travers l'ébauche pour la formation de plages de la face avant de la pièce moulée entièrement entourées par la matière plastique de la seconde couleur.

La réalisation de tels ponts est illustrée par les figures 7 et 8. La face 1 du tableau de commande (figure 8) présente une plage noire 25 entièrement entourée par une plage annulaire blanche 24, elle-même entourée par une plage noire 26. La plage annulaire 24 est formée par une saillie annulaire 27 du composant blanc 18 traversant l'épaisseur du composant noir 19, saillie obtenue de façon classique par une dépression de l'empreinte du moule servant à réaliser l'ébauche de couleur blanche.

Lors de l'injection de la matière plastique noire, la saillie 27 empêche celle-ci de s'écouler le long de la face 1 pour remplir l'espace compris à l'intérieur de la saillie annulaire. Pour réaliser ce remplissage, on prévoit, dans l'épaisseur de l'ébauche, une paire d'ouvertures traversantes adjacentes à la saillie 27. Cette paire comprend une ouverture 28 en regard de la plage 25, donc à l'intérieur de la saillie 27, et une ouverture 29 en regard de la plage 26 et par conséquent à l'extérieur de cette saillie. Ces ouvertures sont ménagées, comme la saillie 27, par la paroi de l'empreinte 101 définie par la partie fixe 103 du moule. La partie mobile 104 du moule comporte une broche 109' actionnée de la même façon que les broches 109 de la figure 6, et qui, lors de l'injection de l'ébauche, limite les ouvertures 28 et 29. Lors de l'injection de la matière plastique noire, la broche 109' est effacée et dégage les ouvertures. La matière plastique traverse alors l'ouverture 29, puis forme un pontet 30 en saillie sur la face arrière 2 du tableau de commande, et traverse l'ouverture 28 pour atteindre l'espace intérieur à la saillie 27. Bien entendu, on peut prévoir deux paires d'ouvertures 28 et 29 ou plus selon la forme et les dimensions de la plage fermée à réaliser.

Des changements peuvent être apportés aux exemples décrits et représentés, sans sortir de l'invention. Ainsi, les différentes positions de fermeture du moule peuvent être obtenues par une translation au lieu d'une rotation. Le nombre de ces positions de fermeture peut être supérieur à deux, une matière plastique étant injectée, dans chacune de ces positions à l'exception de la première, sur une ébauche obtenue dans la position précédente. Les inserts 20 et les éléments rapportés 22 et 23 peuvent ainsi être remplacés par des composants réalisés dans le même moule et au cours d'une même opération de moulage que les composants 18 et 19. Les composants conducteurs de lumière peuvent être en une même matière plastique de base additionnée de pigments différents pour obtenir des couleurs différentes à partir d'une même source lumineuse.

L'invention prévoit également d'associer deux organes de conduction de lumière selon l'invention, ou plus, une plage de sortie d'un premier organe coopérant avec une plage d'entrée d'un autre organe pour mettre en série les trajets de conduction correspondants des deux organes. Les deux organes de conduction peuvent être mobiles l'un par rapport à l'autre, l'un d'eux étant par exemple un tableau de commande d'installation de chauffage ou de climatisation et l'autre un bouton de commande monté sur ce tableau, et les trajets de conduction peuvent n'être mis en série que pour une ou plusieurs positions relatives déterminées, de façon à indiquer par exemple ces positions par l'éclairage sélectif de signes lumineux correspondants.

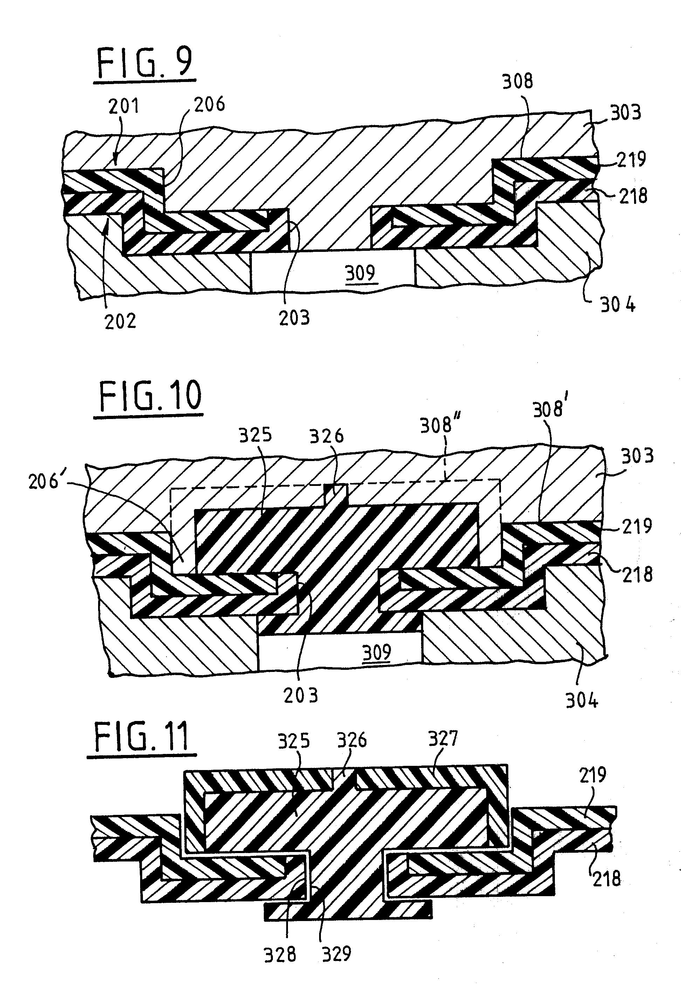

Le même résultat peut aussi être obtenu grâce à un organe conducteur de lumière comportant au moins deux pièces mobiles l'une par rapport à l'autre obtenues par injection de matières différentes dans un même moule, comme décrit ci-après en se référant aux figures 9 à 11.

La figure 9 montre partiellement en coupe un tableau de commande d'appareil de chauffage comprenant un composant conducteur de lumière 218 et un composant opaque 219 analogues aux composants 18 et 19 du premier exemple, obtenu par injection de la matière du composant 219 dans une empreinte 308 d'un moule qui contient sous forme d'ébauche le composant 218. L'empreinte 308 est définie par une partie fixe 303 et une partie mobile 304 du moule.

La pièce présente un trou traversant 203 entouré par une dépression circulaire 206 partant de la face avant 201 de la pièce, ce trou et cette dépression étant analogues aux trous 3, 4 et 5 et aux dépressions 6, 7 et 8 du premier exemple. La partie mobile 304 du moule présente une broche coulissante 309 dont l'extrémité vient en contact avec la face arrière 202 de la pièce dans la région du trou 203.

A la figure 10, l'ébauche formée par les composants 218 et 219 a été transférée, par ouverture et refermeture du moule, et sans être séparée de la partie mobile 304, dans une nouvelle empreinte 308'. La broche 309 est quelque peu rétractée et n'est plus en contact avec l'élément 218. On injecte alors dans cette empreinte une matière plastique conductrice de lumière 325 ayant un retrait plus important que celles des composants 218 et 219 et ne se soudant pas à celles-ci. La matière 325 remplit le trou 203 et la majeure partie de la dépression 206, seule une portion annulaire périphérique 206' de celle-ci étant occupée par la partie fixe 303 du moule. Grâce au recul de la broche 309, la matière 325 recouvre également la face arrière de la pièce 218-219 autour du trou 203. L'empreinte du moule ménage sur le composant 325 une nervure diamétrale 326 située sur sa face tournée vers l'avant de la pièce 218-219.

On transfère ensuite l'ébauche ainsi obtenue dans une quatrième empreinte 308", dont le contour est figuré en trait interrompu à la figure 10, dans laquelle on injecte une matière plastique opaque ayant le même retrait que la matière 325, et se soudant à celle-ci et non à celle du composant 219. Le composant opaque 327 ainsi réalisé (figure 11) occupe l'espace annulaire 206' et recouvre la face avant du composant 325 en affleurant à la nervure 326.

La figure 11 montre l'ensemble obtenu après démoulage. Un léger jeu existe entre la pièce 218-219 et la pièce 325-327, en raison du retrait différent de leurs matières constitutives. La pièce 325-327 constitue un bouton de manoeuvre pouvant tourner par rapport à la pièce 218-219.

Les surfaces en regard 328 et 329 des composants 218 et 325 respectivement constituent une plage de sortie d'un trajet de conduction de lumière du premier et une plage d'entrée d'un trajet de conduction de lumière du second, ces deux trajets étant par conséquent reliés en série. La surface visible de la nervure 326 constitue une plage de sortie du trajet de conduction de lumière du bouton de manoeuvre. Cette plage de sortie peut présenter la forme d'une flèche, de façon à indiquer, en étant dirigée vers un symbole parmi plusieurs, tels que les symboles 15 de la figure 1, prévus sur la face avant du composant 219 autour de la dépression 206, à quel mode de fonctionnement de l'appareil correspond la position du bouton de commande.

Il est possible de réaliser de cette façon plus de deux trajets de conduction de lumière en série, le trajet du bouton rotatif pouvant présenter par exemple une plage d'entrée et une plage de sortie coopérant respectivement avec une plage de sortie d'un premier trajet et une plage d'entrée d'un second trajet de la pièce fixe, le premier trajet et le second trajet pouvant le cas échéant être définis par deux composants de couleurs différentes.

Il est également possible de réaliser dans un même moule, de la façon qui vient d'etre décrite, deux pièces mobiles l'une par rapport à l'autre, dont l'une ne comporte pas de trajet de conduction de lumière et peut être par exemple un bouton rotatif ayant seulement une fonction de commande.

Pour réaliser ces pièces, on peut utiliser par exemple, d'une part de l'ABS (copolymère acrylonitrilebutadiènestyrène) à 5 °/oo de retrait, et d'autre part un polyacétal à 2% de retrait.

## Revendications

1.- Procédé de fabrication d'un organe conducteur de lumière formé d'au moins une matière plastique conductrice de lumière et une matière plastique opaque, la matière plastique conductrice de lumière définissant au moins un trajet de conduction de lumière entre une plage d'entrée située dans une première face de l'organe et une plage de sortie située dans une seconde face de l'organe, ladite plage de sortie ou un ensemble de plages de sorties adjacentes correspondant à différents trajets de conduction étant adjacent à au moins une plage de fond définie par la matière opaque, caractérisé en ce qu'on injecte successivement et en automatique les deux matières plastiques dans un même moule, selon les étapes suivantes :

 a) injection d'une première matière dans une première empreinte pour réaliser une ébauche;

 b) ouverture du moule, l'ébauche restant solidaire de l'une des parties du moule;

 c) refermeture du moule dans une position différente de sa position initiale, pour définir une seconde empreinte de volume plus grand que celui de la première et contenant l'ébauche;

 d) injection de la seconde matière dans le volume libre de la seconde empreinte.

2.- Procédé selon la revendication 1, caractérisé en ce qu'on injecte successivement trois matières ou plus, la séquence des étapes b) à d) étant répétée autant de fois qu'on injecte de matières en plus de la première.

3.- Procédé selon l'une des revendications 1 et 2, caractérisé en ce que la dernière matière injectée est opaque et que la ou les autres matières injectées sont conductrices de lumière, ces dernières, le cas échéant, pouvant être de couleurs différentes, notamment par addition de pigments, de façon à modifier la lumière par conduction.

4.- Procédé selon l'une des revendications précédentes, caractérisé en ce qu'on réalise l'ébauche par surmoulage de la première matière sur un ou plusieurs inserts en matière plastique conductrice de la lumière, ces inserts définissant des trajets de conduction supplémentaires.

5.- Procédé selon l'une des revendications précédentes, caractérisé en ce qu'une matière injectée dans le volume libre laissé par une ébauche préalablement formée présente une composition chimique telle qu'elle n'adhère pas à la ou aux matières constitutives de l'ébauche, et qu'elle présente un retrait différent de celui de ces dernières, de façon à réaliser une pièce distincte de l'ébauche, mobile par rapport à celle-ci et inséparable de celle-ci.

6.- Procédé selon l'une des revendications précédentes, caractérisé en ce qu'on réserve une ouverture traversante dans l'ébauche lors d'une étape d'injection et qu'on permet à une matière injectée ultérieurement de traverser l'ouverture lors de l'étape d'injection correspondante.

7.- Procédé selon la revendication 6, caractérisé en ce que le passage de la matière dans l'ouverture de l'ébauche réalise un rivetage mutuel de cette matière à celle(s) constituant l'ébauche.

8.- Procédé selon l'une des revendications 6 et 7, caractérisé en ce que le passage de la matière dans l'ouverture de l'ébauche réalise la jonction entre deux plages (25,26) de la seconde face (1) définies par cette matière et situées respectivement à l'intérieur et à l'extérieur d'une plage annulaire (24) définie par l'ébauche.

9.- Moule pour la mise en oeuvre du procédé selon l'une des revendications 6 à 8, comprenant une partie fixe (103) et une partie mobile (104) pouvant prendre par rapport à la partie fixe au moins deux positions de fermeture, la partie mobile coopérant avec la partie fixe dans la première et la seconde de ces positions pour définir la première empreinte (101) et la seconde empreinte (107) respectivement, des moyens étant prévus pour amener un élément déplaçable (109) porté par la partie mobile du moule dans une position adjacente à la première empreinte lorsque la partie mobile est dans sa première position, et pour éloigner cet élément déplaçable de l'ébauche lorsque la partie mobile est dans sa seconde position.

10.- Moule selon la revendication 9, caractérisé en ce que lesdits moyens comprennent deux équipages (109-115) pouvant coulisser parallèlement à la direction de fermeture du moule, un élément de butée (116) disposé dans la partie fixe au voisinage de la seconde empreinte pour maintenir un premier équipage coulissant éloigné de la partie fixe et écarter l'élément déplaçable de l'ébauche, et un culbuteur (119) pouvant pivoter autour d'un axe (118) perpendiculaire à ladite direction sous l'action du premier équipage coulissant pour pousser le second équipage coulissant vers la partie fixe et amener l'élément déplaçable dans sa position adjacente à la première empreinte.

11.- Organe conducteur de lumière obtenu par le procédé selon l'une des revendications précédentes.

12.- Organe conducteur de lumière selon la revendication 11, caractérisé en ce que l'une au moins des plages de sortie (12,13,15,16) de lumière constitue un signe visuel destiné à être éclairé par le trajet de conduction correspondant de façon à être vu par un observateur regardant vers la seconde face.

13.- Organe conducteur de lumière selon l'une des revendications 11 et 12, caractérisé en ce qu'il présente une pluralité de plages de sortie (12,13,15,16) reliées par des trajets de conduction à une plage d'entrée commune (2).

14.- Organe conducteur de lumière selon l'une des revendications 11 à 13, caractérisé en ce qu'il est propre à coopérer avec un autre tel organe, selon un mouvement relatif faisant se déplacer une plage d'entrée d'un premier organe devant une pluralité de plages de sortie de l'autre organe, ou inversement, de façon à établir un trajet de conduction variable comprenant en série au moins un trajet de chacun des deux organes.

15.- Organe conducteur de lumière selon l'une des revendications 11 à 13, obtenu par le procédé selon la revendication 5, caractérisé en ce que chacune de ses deux pièces mobiles l'une par rapport à l'autre présente au moins un trajet de conduction, un trajet d'une pièce et un trajet de l'autre pièce étant placés en série pour au moins une position relative de celles-ci.

FIG.1

FIG.2

0282392

# FIG. 3

21

9

23

20

3

4

5

21

21

20

22

21

0282392

FIG.4

FIG.5

FIG.7

FIG.8

FIG.6

0282392

0282392

## FIG. 9

201  206  308  303  219  218  309  202  203  304

## FIG. 10

206′  325  326  308″  308′  303  219  218  309  203  304

## FIG. 11

325  326  327  219  218  328  329

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int. Cl.4) |
|---|---|---|---|
| Y | PATENT ABSTRACTS OF JAPAN, vol. 6, no. 228 (M-171)[1106], 13 novembre 1982; & JP-A-57 129 729 (BRIDGESTONE TIRE K.K.) 11-08-1982 * Résumé * | 1,2,4-7 ,11-15 | B 29 C   45/14 B 29 C   45/16 B 60 Q    3/04 B 29 D   11/00 |
| Y | DE-A-3 413 721   (FICKENSCHER & CO. GmbH) * Pages 1-8; page 9, lignes 1-19; figures 1-5 * | 1,2,4-7 | |
| Y | EP-A-0 036 305   (BRITAX VEGA LTD) * En entier * | 2 | |
| Y | FR-A-2 516 712   (SUDDEUTSCHE KUHLERFABRIK JULIUS FR. BEHR GmbH) * En entier * | 1,11-15 | |
| Y | FR-A-1 442 773   (FORD-WERKE AG) * En entier * | 1,11-15 | |
| A | CH-A-  374 196   (E. SULZER) * En entier * | 1-4 | DOMAINES TECHNIQUES RECHERCHES (Int. Cl.4) |
| A | PATENT ABSTRACTS OF JAPAN, vol. 7, no. 47 (M-196)[1192], 24 février 1983; & JP-A-57 197 139 (HITACHI SEISAKUSHO K.K.) 03-12-1982 | 1,5-8 | B 29 C B 29 D B 60 K B 60 Q |
| A | FR-A-2 069 184   (ING. C. OLIVETTI & C. S.p.A.) * En entier * | 1,9,10 | |
| A | PATENT ABSTRACTS OF JAPAN, vol. 3, no. 147 (C-66), 5 décembre 1979, page 4 C 66; & JP-A-54 123 178 (MATSUSHITA DENKI SANGYO K.K.) 25-09-1979 -/- | 1,5 | |

Le présent rapport a été établi pour toutes les revendications

| Lieu de la recherche | Date d'achèvement de la recherche | Examinateur |
|---|---|---|
| LA HAYE | 25-05-1988 | GOURIER P.A. |

Office européen
des brevets

**RAPPORT DE RECHERCHE EUROPEENNE**

Numero de la demande

EP 88 40 0452

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int. Cl.4) |
|---|---|---|---|
| A | DE-A-2 557 238 (VDO ADOLF SCHINDLING AG)<br>* En entier *<br>--- | 11,12 | |
| A | DE-B-1 675 063 (MAX KAMMERER GmbH)<br>* En entier *<br>--- | 14,15 | |
| A | FR-A-2 266 588 (E. ALOY UBACH)<br>* En entier *<br>----- | | |

**DOMAINES TECHNIQUES RECHERCHES (Int. Cl.4)**

Le présent rapport a été établi pour toutes les revendications

| Lieu de la recherche | Date d'achèvement de la recherche | Examinateur |
|---|---|---|
| LA HAYE | 25-05-1988 | GOURIER P.A. |

EPO FORM 1503 03.82 (P0402)